# EUROPEAN PATENT APPLICATION

(11) **EP 3 702 816 A1**
(43) Date of publication of application: **02.09.2020**
(21) Application number: 19160152.5
(22) Date of filing: 28.02.2019
(51) Int. Cl.: G02B 5/12, A44C 17/00, A41D 13/01

(54) **DECORATIVE COMPOSITE BODY**

(71) Applicant: D. Swarovski KG, 6112 Wattens (AT)
(72) Inventor: NEUHAUSER, Christof, 6020 Innsbruck (AT); EDER, Karlheinz, 6220 Buch in Tirol (AT); WOLTER, Henrique, 6020 Innsbruck (AT); MESSNER, Peter, 6111 Volders (AT); STACKLER, Thomas, 6112 Wattens (AT); FRÖHLICH, Philipp, 6167 Neustift (AT)
(74) Representative: Moore, Michael Richard

(57) **Abstract**

A decorative element (1) comprising a transparent body (2) having a faceted front surface (2a) and a back surface (2b), a retroreflective film (3) provided on at least a region of the flat back surface (2b) of the transparent body (2), and an adhesive (4) between the retroreflective film (3) and the flat back surface (2b) of the transparent body (2). Methods of making a decorative element (1) and articles incorporating the decorative element are also described.

## Description

### Field of the Invention

The invention relates to a decorative element comprising a transparent body having a faceted front surface and a back surface, such as a crystal, and a retroreflective film provided on at least a part of the flat back surface. A method of making a decorative element is also provided.

### Background

Faceted transparent decorative components such as crystals have been used to embellish products for a long time. Such components can be combined with a mirrored surface in order to create a "sparkling effect", where light incident on the mirror surface is reflected in all directions due to the interaction with the facets of the component.

On the other hand, retroreflective films, which are films configured to reflect most incident light back to its source, have been known for many years for use in safety applications (e.g. road signs, high visibility clothing, vehicles, etc.), to increase the visibility of objects or persons carrying the film in low light conditions. However, these films have a dull appearance, e.g. in broad daylight, and as such are typically limited to use for purely functional (e.g. road safety) purposes.

It is against this background that the invention has been devised.

### Summary of the Invention

In a first aspect, the invention resides in a decorative element comprising a transparent body having a faceted front surface and a back surface, a retroreflective film provided on at least a region of the back surface of the transparent body, and an adhesive between the retroreflective film and the back surface of the transparent body.

The present inventors have surprisingly discovered that a retroreflective film could be combined with a faceted transparent body such as a crystal, to obtain a decorative component that maintains optical characteristics comparable to those of decorative crystal components, i.e. maintaining their aesthetic functionality (e.g. aesthetically pleasing optical properties in daylight conditions while having additional safety functionalities due to the presence of the retroreflective film (e.g. high visibility in low light conditions).

In embodiments, the back surface of the transparent body is substantially flat. Such embodiments may conveniently enable easy application of the decorative element to flat surfaces, clothing, etc.

In embodiments, the transparent body is made of glass, plastic or cubic zirconium. In some embodiments, the transparent body is made of crystal glass.

In embodiments, the transparent body is coloured. In some such embodiments, the colouring is provided as a colouring agent throughout the body of the transparent body. Alternatively or in addition to colouring the body of the material, a colouring may be provided as a coating or surface treatment on at least a region of the front and/or back surface of the transparent body.

In embodiments, a decorative coating is provided on at least a region of the front surface of the transparent body.

Colouring and decorative coatings may enable the decorative element to be provided with a variety of decorative effects, improving their flexibility of use. Colourings and decorative coatings are preferably configured such that the transparent body remains transparent to light entering through the front surface and reflecting on the retroreflective film provided on the back surface of the transparent body.

In embodiments, the back surface of the transparent element may have a diameter of between 1 and 80 mm, between 1 and 60 mm, between 1 and 40 mm, between 1 and 20 mm, or between 2 and 12 mm. In embodiments, the back surface of the transparent element may be substantially circular. In embodiments where the back surface is not substantially circular, the term "diameter" may refer to the diameter of the smallest circle that would fit the geometry of the back surface.

Advantageously, this range of sizes strikes a balance between ease of application of the retroreflective film on the back surface and risk of bubbles appearing between the film and the back surface of the transparent body. When the back surface is very small, it can be more difficult to precisely apply the retroreflective film on the back surface, especially at an industrial scale. Conversely, when the surface on which the retroreflective film is applied is very large, the risk of bubbles being trapped between the film and the back surface when they are glued together is higher.

In embodiments, the retroreflective film is provided on substantially the whole of the back surface of the transparent body.

In embodiments, the retroreflective film does not overhang the back surface of the transparent body. The absence of overhang may contribute to the stability of the product as film overhangs may be caught or damaged, which damage may spread through the film. Further, overhangs may be aesthetically problematic.

In embodiments, the retroreflective film is provided on a region of the back surface of the transparent body that covers most (such as e.g. 90%, 95%, 98%, or 99%) of the surface of the back surface of the transparent body, except for a small perimeter region outside of the retroreflective film (where the area of the perimeter region represents e.g. approx. 10%, 5%, 2% or 1% of the surface of the back surface of the transparent body).

Larger surfaces of retroreflective film may provide for better retroreflective properties of the decorative element, while also increasing the risk of creating regions of films that overhang the back surface of the transparent body due to limitations in the precision of the placement and/or application process. As such, decorative elements comprising a retroreflective film configured to cover most but not all of the surface of the back surface of the transparent body may be particularly advantageous.

In embodiments, the retroreflective film is provided on a region of the back surface of the transparent body that forms a pattern. Patterns may be aesthetically advantageous, or even informative.

In embodiments, the retroreflective film is a prismatic retroreflective film. In other embodiments, the retroreflective film is a glass-bead retroreflective film.

Prismatic retroreflective films typically have a higher retroreflection grade than glass-bead retroreflective films and are therefore preferred.

In embodiments where the retroreflective film is a prismatic retroreflective film, the film may comprise a base layer and a prismatic layer. The prismatic layer may comprise a plurality of microprisms, which are bonded to the base layer. In embodiments, the retroreflective film further comprises a metallisation layer on the back of the prismatic layer. In other embodiments, the retroreflective film is an air-backed prismatic film including a base layer, a prismatic layer and a layer of air trapped between the back of the microprisms of the prismatic layer and a backing layer, instead of a metallisation layer.

Metallised prismatic retroreflective films are advantageous for the purpose of the invention as they have a high reflection grade and can be cut arbitrarily without altering the optical properties of the resulting decorative element.

In embodiments, the retroreflective film further comprises a protective coating, on top of the base layer. The protective coating may protect the prismatic film during e.g. manufacture, transport, cutting and application.

In embodiments, the adhesive provided between the retroreflective film and the back surface of the transparent body is transparent. In embodiments, the adhesive is chosen such that, when applied at a thickness sufficient to bond the retroreflective film and the transparent body, the adhesive forms a transparent adhesive layer. Preferably, the adhesive is such that visible light can pass through the adhesive and be reflected on the retroreflective film, and no loss of reflected light and/or no appearance of coloring is visible to the naked eye due to the presence of the adhesive.

In embodiments, the adhesive forms a layer between the retroreflective film and the transparent body that has a thickness between 30 µm and 200 µm, preferably between 50 µm and 170 µm, between 70 µm and 150 µm, or between 70 µm and 130 µm. In embodiments, the adhesive may be applied in a thickness of about 100 µm.

When an adhesive is applied too thinly (e.g. below 30 µm, below 50 µm, or below 70 µm) for a particular adhesive, the bond may be too weak. When the adhesive is applied too thickly (e.g. above 200 µm, above 170 µm, above 150 µm or above 130 µm) for a particular adhesive; some of the adhesive may be wasted with no increase in bond strength; the adhesive layer may lose transparency (at least to some extent), and/or some of the adhesive may spill outside of the bonding area when the decorative element is assembled - this may increase the complexity of the process as the excess may need to be removed. Advantageously, applying the adhesive at a target thickness of about 100 µm may ensure that the thickness of the adhesive layer remains within the preferred range of between 70 µm and 130 µm, despite variability in thickness that may be inherent to the adhesive application process.

In embodiments, the adhesive is a reactive adhesive, such as an ultraviolet (UV) light curing adhesive, a heat curing adhesive, or a moisture curing adhesive or a multi-component adhesive.

Reactive glues such as UV glues, chemical (moisture curing or multi-components) and thermal curing glues are particularly advantageous as they are hard and stable when fully cured (i.e. when the curing reaction process is completed the glue is hard and cannot be re-melted). By contrast, hot-melt adhesives (thermal non-curing glues) rely on thermoplastic materials that solidify as they cool down and can be re-melted.

In embodiments, the adhesive is a UV glue. UV glues may be advantageous in some embodiments because their curing can be tightly controlled in the manufacturing process. The glue can be applied on the retroreflective film and/or the transparent body at a convenient time in the process, then the decorative element can be assembled and the glue cured by exposing the glue to UV light through the transparent body, as and when needed. However, UV glues have the disadvantage that they may not be easily cured when the transparent body is colored, or coated in any way that restricts traveling of UV light through the transparent body.

In embodiments, the adhesive is a chemical or thermal curing glue. Chemical and thermal curing glues are both reactive glues that do not impose any limitations on the colour of the transparent body. In embodiments, the adhesive is a chemical curing glue. Chemical curing glues are particularly preferred as they do not require an additional process step to cure the glue.

In embodiments, the adhesive is a one-part chemical curing glue. One-part adhesives that are cured at least partly by reaction with moisture are advantageous as they do not require an additional step of mixing two or more components prior to application of the adhesive on the retroreflective film and/or transparent body.

In embodiments, the adhesive is chosen such that the non-cured adhesive (e.g. the adhesive prior to curing, if curing is necessary) has a viscosity that is sufficiently high for a layer of adhesive applied on the retroreflective film to maintain its thickness for a period of time before attachment of the retroreflective film to the transparent body; e.g. a time that is sufficient for cutting and assembly of the film with the transparent body. In embodiments, the non-cured adhesive may have a semi solid or solid consistency.

Adhesives that can be applied on the retroreflective film prior to cutting are particularly advantageous. Indeed, it is comparatively easy and economical to apply glue uniformly to the surface of a continuous film than to a multitude of discrete surfaces such as the back surface of the transparent body or the surface of a pre-cut piece of film to be adhered to a small transparent body. Additionally, applying the adhesive to the whole surface of the film prior to cutting ensures that the whole surface of the retroreflective film that will be applied to the transparent body is fully covered with glue.

In embodiments, the adhesive is a chemical hardening glue that has a curing time (i.e. time between mixing of the multiple components or exposure to moisture and a fully reacted glue) of between 4 and 168 hours, preferably between 8 and 48 hours, between 8 and 36 hours, between 12 and 36 hours or about 24 hours.

Advantageously, these adhesives may allow sufficient time for preparation (e.g. cutting of the retroreflective film) and assembly of the components following application of the glue, while not taking so long to cure as to put an onerous constraint on the further handling steps of the assembled decorative elements.

In embodiments, the adhesive is chosen such that curing speed of the adhesive can be adjusted by controlling the atmospheric conditions during curing. For example, some reactive glues (UV, moisture or temperature sensitive) may have a different curing speed at high or low humidity. In such examples, the humidity may be controlled to be low during and following application of the glue on the retroreflective film and/or transparent body, then higher after the retroreflective film and transparent body have been assembled, so as to increase the curing speed and obtain cured components that can be manipulated as quickly as possible after assembly.

In embodiments, the adhesive is a polyurethane-based, temperature and humidity-dependent reactive glue, such as TECHNOMELT® PUR 9041 by HENKEL®. Such adhesives can be applied to the retroreflective film and/or the transparent body prior to assembly (and possibly even prior to cutting of the retroreflective film, if the adhesive is applied thereon). Such adhesives can be applied with a thickness of about 70 µm to 130 µm, such as about 100 µm. Advantageously, such adhesives may take about 24 hours to fully cure. Further, the speed of curing of such adhesives may be adjustable by controlling the humidity and/or the temperature of the atmosphere during curing.

In embodiments, the decorative element further comprises a backing layer on the surface of the retroreflective film that is distal from the back surface of the transparent element.

In embodiments, the backing layer comprises one or more layers of adhesive, and/or one or more protective layers. In embodiments where the retroreflective film is a prismatic film, the backing layer may substantially fill the gaps in the back of the prismatic layer.

In embodiments, the backing layer comprises one or more layers of adhesive. The use of pre-applied adhesive may enable easy application of the finished decorative element to the surface of an article.

In embodiments, the backing layer comprises a layer of adhesive and a protective film. In such embodiments, the protective film may be removed from the adhesive before applying the decorative element on the surface of an article. In such embodiments, the layer of adhesive may comprise a non-reactive pressure-sensitive adhesive. Advantageously, a pre-applied pressure-sensitive adhesive may enable easy application of the decorative element, for example, to articles such as plastic or metal articles.

In embodiments, the backing layer comprises a layer of non-reactive thermal adhesive on the side of the backing layer that is exposed in the finished decorative element. Advantageously, a pre-applied hot-melt adhesive may enable easy application of the decorative element to many surfaces including e.g. garments, textiles, etc.

In embodiments, the hot melt adhesive is applied in a thickness between 100 µm and 200 µm. In embodiments, the backing layer comprises a layer of hot melt adhesive that is about 150 µm thick.

Advantageously, layers of hot melt adhesive in the above range may provide for sufficient adhesion even on porous substrates such as textiles. When the layer of hot melt adhesive is too thick, the risk of the hot melt adhesive spilling out when the decorative element is applied to a surface increases, resulting in possible application problems, loss of aesthetic quality, and waste of adhesive.

In embodiments, the hot melt glue is a copolyamide-based glue, such as Griltex® 1A from EMS-CHEMIE. In embodiments, the hot melt glue is a thermoplastic polyurethane-based glue, such as VP 1006 by Collano® AG.

In embodiments, the backing layer comprises a protective layer. In embodiments, the backing layer comprises a protective layer and one or more adhesive layer(s), at least one of the one or more adhesive layers being provided on the side of the backing layer that is exposed in the finished decorative element.

In embodiments, the backing layer comprises a protective layer. A protective layer may advantageously protect the retroreflective film from damage to e.g. the structure of the retroreflective elements, the metallisation layer if present, etc, particularly before the finished decorative element is attached to a surface.

In embodiments, the protective layer comprises a layer of lacquer. In embodiments, the layer of lacquer comprises a lacquer selected from the group consisting of: epoxy lacquers, one component polyurethane lacquers, bi-component polyurethane lacquers, acrylic lacquers, UV-curable lacquers, and sol-gel coatings. The lacquer may optionally be pigmented.

In embodiments, the lacquer is applied by spraying, digital printing, rolling, curtain coating or other two-dimensional application methods known in the art.

Suitably, the lacquer may be selected so as to be mechanically and chemically robust and bondable.

In embodiments, a lacquer is mechanically and chemically robust if it would not substantially degrade or allow degradation of the underlying retroreflective film in the conditions that would be expected in the intended use. For example, the decorative element may advantageously show high resistance to any of sweat, machine washing, temperature changes, sun exposure test, and suitable performance in anti-corrosion salt spray and climate tests. Resistance to machine washing may be tested by subjecting the decorative element to 10 cycles of machine washing at 40°C, optionally followed by drying, and examining the decorative element for any visible damage, with the naked eye. Suitable performance in climate tests may be tested by exposing the decorative element to climate tests (e.g. exposure to the environment or a simulated environment) for 480 hours, and examining the decorative element for any visible damage, with the naked eye. Resistance to sweat may be tested by putting the decorative element in contact with artificial sweat for 48 hours, and examining the decorative element for any visible damage, with the naked eye. Resistance to temperature changes may be tested by subjecting the decorative element to 20 cycles of temperature changes, and examining the decorative element for any visible damage, with the naked eye. For example, a cycle of temperature changes may comprise exposing the decorative element to a temperature of about 70°C, followed by a sudden transfer to -20°C, then to room temperature (such as e.g. between 20 and 25 °C). Resistance to sun exposure may be tested by subjecting the decorative element to a simulated solar energy of 13,8 MJ/m² and examining the decorative element for any visible damage, with the naked eye. For example, the decorative element may be subjected to light between about 300 and about 800 nm at about 650 W/m² for a period of about 48 to 72 hours, such as about 62.8 hours. Suitable performance in anti-corrosion salt spray may be tested by exposing the decorative element to sea water tests for 96 hours, and examining the decorative element for any visible damage, with the naked eye.

In embodiments, the decorative element has a retroreflection grade of at least 20% at 0°, where the retroreflection grade is the percentage of light that is reflected back in the direction of incidence and an angle of 0° is perpendicular to the back surface of the transparent body 2. In embodiments, the decorative element has a retroreflection grade of at least 30% at 0°, or at least 40% at 0°.

In embodiments, the decorative element has a retroreflection grade that is higher at all angles between 0 and 70° than a decorative element comprising the same transparent body but with a mirror layer applied on the regions of the back surface of the decorative element where a retroreflective film is provided according to the invention.

In embodiments, the decorative element has a light return (also known as 'brightness' or 'brilliance') of at least 0.04%, at least 0.05%, at least 0.06%, at least 0.07%, or at least 0.08% Brightness may be measured according to the Gemological Institute of America (GIA) standard as set out in Moses et al., 2004 (Gems & Gemology, Fall 2004, Vol. 40,

### No. 3, https://www.gia.edu/gems-gemology/fall-2004-grading-cut-quality-brilliant-diamond-moses).

Therefore, the decorative elements according to the invention may maintain an acceptable level of brightness for a decorative gemstone, despite the addition of retroreflective properties. Conversely, the decorative elements according to the invention may have a higher level of brightness than retroreflective materials, in addition to having good retroreflective properties.

According to a second aspect of the invention, there is provided a method of making a decorative element, the method comprising: providing a transparent body having a faceted front surface and a back surface; providing a retroreflective film; applying adhesive on at least a region of the retroreflective film and/or at least a region of the back surface of the transparent body; combining the transparent body and the retroreflective film such that a composite body is obtained comprising the transparent body and the retroreflective film applied on at least a region of the back surface of the transparent body.

Embodiments of the present aspect of the invention may comprise any of the features of the first aspect. In particular, any of the features of the transparent body, retroreflective film, adhesive and decorative element described in relation to the first aspect apply equally to the transparent body, retroreflective film, adhesive and composite element of the present aspect.

In embodiments, the method comprises performing the method for one or more decorative elements, i.e. simultaneously for a plurality of transparent bodies, resulting in the making of a plurality of decorative elements. For example, tens, hundreds or thousands of decorative elements may be made simultaneously and/or in a continuous or batch process.

In embodiments, the adhesive is applied as a layer. In embodiments, the layer of adhesive is applied on a major portion of and/or substantially the whole surface of the retroreflective film. In some such embodiments, the adhesive is applied as a substantially continuous layer on the retroreflective film, for example, using a roll-to-roll or roll-to-plate process. Thus, the adhesive is advantageously applied to a sheet of retroreflective film. In other words, in such embodiments the adhesive is applied over a comparatively large surface area of a retroreflective film in comparison to the back surface area of a transparent body to be formed into the decorative element of the invention; i.e. the area to which adhesive is applied is larger than the area of the back surface of a transparent body; and preferably larger than the area of a plurality of back surfaces of a plurality of transparent bodies to which the retroreflective film will be applied.

In other embodiments, the adhesive is applied at discrete locations, for example, as dots or droplets, on the retroreflective film and/or the back surface of the transparent body.

In embodiments, the retroreflective film is cut to a desired shape before or after application of adhesive on the retroreflective film and/or the back surface of the transparent body. In particular, the film may be cut such that it forms a piece that can cover at least a region of the back surface of the transparent body. Preferably, the film is cut such that it forms a piece that can be applied to the back surface of the transparent body without any part of the cut film overhanging the back surface of the transparent body. Suitably, the area of retroreflective film is at least 80%, at least 90%, at least 95%, at least 98% or at least 99% of the area of the back surface of the transparent body and is adhered to the back surface of the transparent body in such a way that the film does not overhang any edge of the back surface of the transparent body.

In embodiments, the film is cut by stamping. Advantageously, cutting by stamping may be performed with a relatively high throughput and does not require expensive or complex equipment. Alternatively, the film may be cut by laser cutting. Advantageously, laser cutting has a high flexibility in terms of shape of cutting since a new stamp does not have to be generated for every new shape.

In embodiments, the film is cut by stamping and the cutting step does not require edge finishing
Advantageously, applying the adhesive on the film prior to cutting allows the whole surface of film that will be applied to the transparent body to be covered with adhesive. Further, applying the adhesive on a continuous film may be more reliable and efficient (e.g. cost effective) than applying adhesive onto a multitude of individual pieces of cut film and/or transparent bodies.

In embodiments, combining the transparent body and the retroreflective film comprises transferring the cut film and/or transparent bodies to a transfer film or sheet. Preferably, the step of transferring the cut film and/or transparent bodies to a transfer film or sheet is performed with a high accuracy.

In embodiments, the step of combining the transparent body and the retroreflective film further comprises sieving transparent bodies such that the transparent bodies are placed at known relative locations that match the positions of the cut film on the transfer film. In such embodiments, the cut pieces of film on the transfer film and the sieved transparent bodies may then be combined.

In embodiments, pressure is applied on the composite body after assembly. Advantageously, this may remove bubbles that may have been trapped between the adhesive and the retroreflective film or back surface of the transparent body, as the case may be. Bubbles may be formed due to slight unevenness in the thickness of the adhesive layer. As such, if no measures are taken in order to reduce and/or prevent the creation of bubbles / remove any bubbles that may have been created, bubbles may remain trapped in the glue as it cures, and the optical quality of the decorative element (i.e. at least its retroflection grade) may be lower.

In embodiments, the curing of the adhesive is controlled such that little or no curing occurs before the composite bodies are assembled and pressure is applied on the composite bodies.

The problems associated with the presence of bubbles may increase if the adhesive cures too quickly. Indeed, in such cases, application of pressure may not be enough to fully remove any bubbles that may be present as the adhesive is no longer sufficiently plastic. Controlling of the curing speed may alleviate this problem.

In embodiments where curing requires the application of UV light and/or heat, curing can be controlled such that it only or primarily occurs after pressure is applied on the composite body.

In embodiments where curing is triggered by exposure to moisture, the humidity in the atmosphere can be controlled such that curing is slow (i.e. the humidity is low) until the composite body is assembled and pressure has been applied on the composite body. Advantageously, the level of humidity may also be controlled such that curing is faster thereafter (i.e. the humidity is high). Faster curing after assembly and bubble removal may be advantageous as fully bonded decorative components can be handled safely (for example, for packaging and/or storing).

In embodiments where curing is triggered by mixing of multiple components, the components and their relative concentrations may be chosen such that curing happens at a speed that is appropriate for the throughput of the assembly and pressure application steps.

Any suitable mechanism for applying the desired pressure to the composite elements can be used.

In embodiments, the pressure is applied by means of a vacuum. For example, the pressure may be applied by placing a flexible material over the assembled composite body(ies) and surrounding support surface, and pumping out air between the flexible material and the composite body. The use of a vacuum may ensure that a uniform pressure is applied on a composite body or each of a plurality of composite bodies despite variations in the heights of the composite bodies. As a result, this may further reduce the risk of air bubbles being trapped between the retroreflective film and the transparent body, thereby improving the optical properties of the resulting component. In some such embodiments, the pressure is applied by assembling the one or more composite bodies on a vacuum plate, applying a flexible (e.g. silicon) film on the assembled one or more composite bodies, and pumping out air between the flexible film and the vacuum plate. In embodiments, a negative pressure may be used, such as a pressure of -0.6 bar.

In embodiments, the vacuum is maintained for at least 2 seconds, at least 5 seconds, at least 10 seconds, at least 20 seconds, at least 30 seconds, or at least one minute. In some embodiments, a pressure of -0.6 bar may be maintained for at least 20 seconds. Advantageously, this period of time may be sufficient to remove any bubbles trapped between the adhesive and the retroreflective film or transparent body.

In embodiments, the method further comprises the step of curing the adhesive. In embodiments, the step of curing the adhesive comprises one or more of: exposing the adhesive to UV light through the transparent body or from the side of the composite body; applying heat to the composite body; or allowing the curing reaction to take place passively (for example, when a multi-component adhesive is used or when a one component adhesive is used that cures at standard atmospheric humidity conditions); or actively by controlling atmospheric conditions (for example, to ensure exposure to a required level of humidity). It will be appreciated that the means selected for curing of the adhesive will be dependent on the properties of the adhesive.

In embodiments, the vacuum is maintained for a period of time sufficient for some of the curing reaction of the adhesive to progress. Advantageously, this may result in a composite body that is sufficiently adhered to enable it to be moved without the retroreflective film and transparent body inadvertently moving relative to each other, or allowing new bubbles to become trapped.

Thus, in embodiments, the vacuum may be maintained while heat or UV light is being applied, i.e. if the glue is a heat-sensitive or UV-sensitive reactive glue, respectively. In embodiments where the adhesive is a chemical hardening glue (i.e. a multicomponent reactive glue or a moisture sensitive reactive glue), the vacuum may be maintained for at least 30 seconds, at least 1 minute, at least 5 minutes, or at least 30 minutes.

In embodiments where a multicomponent adhesive is used, the step of applying the adhesive may comprise a preliminary step of mixing the two or more components of the adhesive before or during application.

In embodiments, the method further comprises applying a layer of lacquer on the side of the retroreflective film distal from the back surface of the transparent body in the composite body. The layer of lacquer may be applied, for example, by spraying. The layer of lacquer is preferably applied after curing of the adhesive.

In embodiments, alone or in combination with the step of applying a layer of lacquer in the composite body, the method may comprise applying a layer of adhesive on the exposed side of the retroreflective film.

The pre-applied adhesive may enable easy application of the decorative element onto an article. Suitable adhesives may include pressure sensitive adhesives and hot-melt (temperature-dependent non-reactive adhesives), as explained above. Hot-melt adhesives are advantageous for any applications to textiles, garments etc.

According to a third aspect, the invention provides a decorative element produced by any embodiment of the second aspect of the invention; optionally wherein the decorative element has any of the features of any embodiment of the first aspect of the invention.

Embodiments of the third aspect of the invention may comprise any of the features of the first or second aspects.

According to a fourth aspect, the invention provides a garment comprising one or more decorative elements according to the first aspect of the invention, or as obtained by the methods of the second or third aspects of the invention.

For the avoidance of any doubt, embodiments of any of the aspects of the invention may comprise any of the features described in relation to any other aspect of the invention, unless such features are clearly not compatible.

### Brief Description of the Drawings

One or more embodiments of the invention will now be described, by way of example only, with reference to the appended drawings, in which:
Figures 1A and 1B show schematic views of decorative elements according to embodiments of the invention, comprising a transparent body having a faceted front surface and a back surface, a layer of adhesive and a retroreflective film on at least a region of the back surface of the transparent body; in the embodiment of Figure 1B, the decorative element further comprises a backing layer on an exposed side of the decorative element;
Figures 2A and 2B show schematic front and side views, respectively, of a transparent body according to embodiments of the invention;
Figures 3A, 3B and 3C show schematic side views of retroreflective films for use in embodiments of the invention;
Figure 4 is a flowchart illustrating a method of making a decorative element according to embodiments of the invention;
Figure 5 is a graph showing the simulated retroflection grade (percentage of light returned to the observer - i.e. in the direction of incidence - as a function of the angle of incidence of the light) for a decorative element according to embodiments of the invention, and comparative examples (retroreflective film alone and flat back crystal according to the prior art); and
Figure 6 is a graph showing the light return (brilliance / brightness) for a decorative element according to embodiments of the invention, and comparative examples (retroreflective film alone and flat back crystal according to the prior art).

### Detailed Description

The present inventors have surprisingly discovered that a retroreflective film could be combined with a faceted transparent body such as a crystal, to obtain a decorative component that maintains the functionality of retroreflective films (e.g. safety features) while having one or more desirable optical characteristics similar to those of existing crystals, i.e. maintaining their aesthetic function.

Throughout this description, the terms 'back', and 'front' surface are used to refer to the surfaces of the transparent body (or decorative element comprising a transparent body) that when applied to the surface of an article, such as to the surface of a garment, are intended to face towards the surface on which the decorative element is applied (back surface) or towards a viewer (front surface), respectively. However, the skilled person will appreciate that the decorative element may have a complex geometry, as required by the circumstances, and as such a back or front surface may, in fact, comprise a collection of jointed or disjointed surfaces. In practice, a front surface is intended to be visible in use, whereas a back surface is intended to be attached or otherwise adhered to an article.

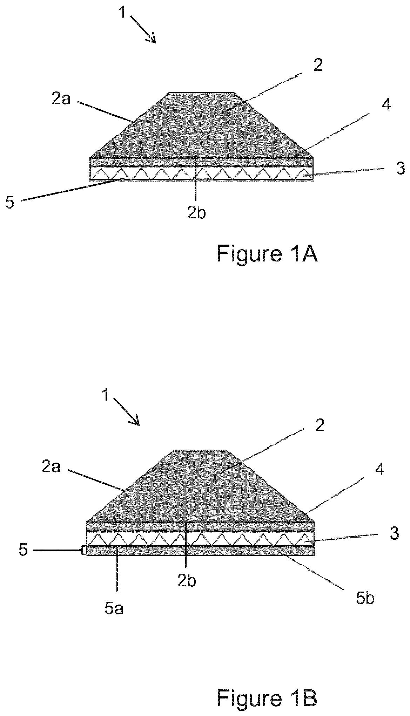

**Figure 1A** shows a schematic view of a decorative element 1 according to the invention. The decorative element 1 comprises a transparent body 2 having a faceted front surface 2a and a back surface 2b. In the embodiments shown, the back surface 2b is substantially flat. A retroreflective film 3 is provided on at least a region of the back surface 2b of the transparent body 2. An adhesive 4 is provided between the retroreflective film 3 and the back surface 2b of the transparent body 2. According to this embodiment, the retroreflective film 3 covers substantially the entire back surface 2b of the transparent body 2.

In the embodiment shown in Figure 1B, the decorative element 1 further comprises a backing layer 5, on the surface of the retroreflective film 3 that is distal from the back surface 2b of the transparent body. A backing layer may comprise one or more adhesive layers and/or one or more protective layers. In the embodiment shown in Figure 1B, the backing layer 5 comprises a first backing layer 5a and a second backing layer 5b. For example, the first backing layer 5a may comprise a first adhesive or a protective layer, such as a layer of lacquer; and the second backing layer 5b may comprise an adhesive, such as a hot melt adhesive. A hot melt adhesive may enable easy application of the decorative element 1 onto the surface of a product, by a user.

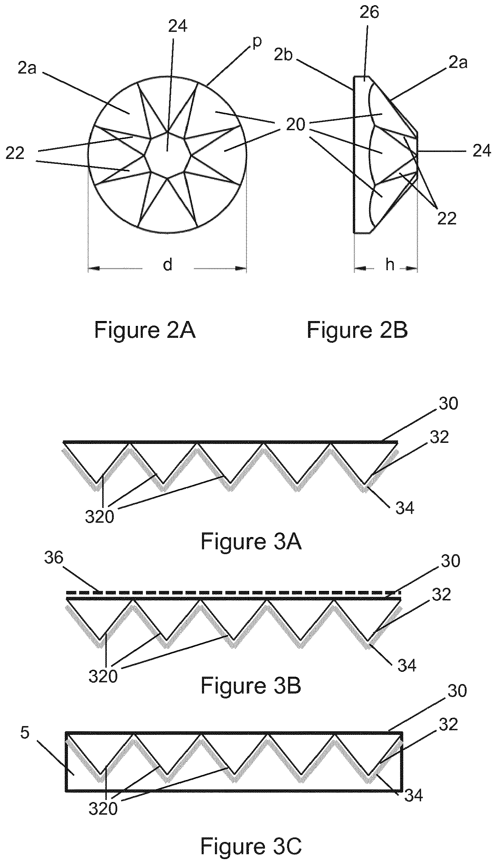

In the embodiments shown in Figures 1A and 1B the retroreflective film 3 may have a prismatic construction. The structure of the retroreflective film will be described in more detail by reference to Figures 3A to 3C below.

**Figures 2A and 2B** show schematic front and side views, respectively, of a transparent body 2 according to embodiments of the invention. In the embodiment shown in Figures 2A and 2B, the transparent body 2 has a back surface 2b that is substantially flat. The back surface 2b has a substantially circular perimeter p, and a diameter d. The front surface 2a of the transparent body 2 of Figures 2A and 2B comprises a plurality of facets 20, 22 and a table 24. The transparent body 2 further comprises a girdle region 26 extending around the perimeter p of the transparent body 2. According to this embodiment, the table 24 is substantially parallel to the back surface 2b, and the facets 20, 22 extend from the table to the girdle region 26. In the embodiment shown, the front surface 2a comprises 8 facets 20 and 8 facets 22, all of which are substantially triangular, and the table 24 is substantially octagonal.

In the embodiment shown, the distance between the table 24 and the back surface 2b represents the height h of the transparent body 2, as the table 24 and back surface 2b are parallel. In other embodiments, the height h may be equal to the maximum distance between the back surface 2b and a point on the front surface 2a through which a plane parallel to the back surface 2b can be drawn.

As the skilled person would understand, the geometric design of the transparent body 2 is not limited in principle, other than comprising at least one faceted front surface 2a and at least one back surface 2b. The type of faceting is closely related to the geometry of the transparent body 2, and to the desired aesthetics of the decorative element 1. In principle, the geometric shape of the facets 20, 22, as well as the number of facets, and the number of different types of facets is not limited. For example, rectangular, square or triangular facets may be used.

The back surface of the transparent body may have any desired size. For example, in embodiments, the back surface of the transparent element may have a diameter of between 1 and 80 mm, between 1 and 60 mm, between 1 and 40 mm, between 1 and 20 mm, or between 1 and 10 mm. In embodiments, the back surface of the transparent element may be substantially circular. In embodiments where the back surface is not substantially circular, the term 'diameter' may refer to the diameter of the smallest circle that would fit the geometry of the back surface. In embodiments, the back surface of the transparent body may have a flat portion that does not extend over the entire rear surface of the transparent body. For example, the flat portion of the back surface of the transparent body may comprise at least 50%, at least 60%, at least 70%, at least 80%, at least 90%, at least 95%, at least 98% or at least 99% of the area of the back surface. In embodiments, the flat portion of the back surface may comprise an area of the back surface that is at least 50%, at least 60%, at least 70%, at least 80%, at least 90%, at least 95%, at least 98% or at least 99% of the area at the largest diameter (or largest projected area, where the transparent body is not substantially circular) of the transparent body.

Advantageously, this range of sizes strikes a balance between ease of application of the retroreflective film on the back surface and the risk of bubbles appearing between the film and the back surface of the transparent body. When the back surface is very small, it can be more difficult to precisely apply the retroreflective film on the back surface, especially at an industrial scale. Conversely, when the surface on which the retroreflective film is applied is very large, the risk of bubbles being trapped between the film and the back surface when they are glued together is higher.

**Figures 3A, 3B and 3C** show schematic side views of retroreflective films 3 according to embodiments of the invention. In the embodiments shown, the film 3 comprises a base layer 30, a prismatic layer 32, and a metallisation layer 34. In the embodiment shown in Figure 3B, the retroreflective film 3 further comprises a protective coating 36, on top of the base layer 30. The protective coating 36 may protect the prismatic film during e.g. manufacture, transport, cutting and application. In the embodiment shown on Figure 3C, a backing layer 5 is provided which fills the gaps in the back of the prismatic layer 32. The backing layer 5 may protect the prismatic layer 32, and/or comprise an adhesive to enable application of the retroreflective film / decorative element comprising the retroreflective film, onto a surface.

In the embodiments shown, the retroreflective film has a prismatic construction, which includes microprisms 320 (together forming the prismatic layer 32) bonded to a base layer 30 (typically a plastic sheet). Prismatic retroreflective films exist as two main types: air-backed prismatic films (which include a layer of air trapped between the back of the microprisms and a backing layer, instead of the metallisation layer 34) and metallised prismatic films (which comprise a reflective metallic layer applied on the back surface of the prismatic layer 32). In the embodiments shown, the retroreflective film 3 is a metallised prismatic film. As will be explained further below, other types of retroreflective films such as glass bead films and air-backed prismatic retroreflective films may alternatively be used.

In embodiments, the metallisation layer 34 is a layer of aluminium. In embodiments, the layer of aluminium is deposited by physical vapour deposition, as known in the art.

In embodiments, the base layer 30 is a flexible polymeric film. In embodiments, the base layer 30 is a UV stabilised polymeric film. Preferably, the base layer 30 has a smooth surface.

In embodiments, the microprisms 320 are formed from a polymer. For example, the microprisms 320 may be made of polyester. In embodiments, the microprisms 320 are integrally bonded with the base layer 30.

In embodiments, the retroreflective film has a total thickness of about 250-300 µm. As the skilled person would understand, the thickness of the retroreflective film is not crucial to the invention provided that the film is thin enough to be bonded to the transparent body and to be negligible in thickness compared to the height of the transparent body so as to not negatively impact the appearance of the decorative element. For example, the thickness of the film, including any backing layer, may be at least 5 times smaller than the height of the transparent body, at least 10 times smaller than the height of the transparent body, at least 25 times smaller than the height of the transparent body, or between 5 and 100 times smaller than the height of the transparent body.

Applying reflective coatings to the back surface of crystals, such as metallic coatings applied using techniques such as physical vapor deposition (PVD) is known in the art. However, the range of optical effects that can be achieved by these techniques is limited. Further, retroreflective films have been known for use on e.g. vehicles, safety clothing, road signaling, etc. However, these films have a dull appearance when light is not shone directly onto them, and as such are limited to use for purely functional (e.g. road safety) purposes.

Against this background, the present inventors have surprisingly discovered that a retroreflective film could be combined with a faceted transparent body, such as a crystal, to obtain a decorative component that maintains some beneficial functionality of retroreflective films while having some desirable optical characteristics of those of existing crystals, e.g. maintaining their aesthetic function.

In embodiments, the decorative elements according to the invention have a retroreflection grade of at least 20% at 0°. The retroreflection grade is the percentage of light that is reflected back in the direction of incidence. An angle of 0° is perpendicular to the back surface of the transparent body 2. In embodiments, the decorative elements according to the invention have a retroreflection grade of at least 30% at 0°, or at least 40% at 0°.

In embodiments, the decorative elements according to the invention have a retroreflection grade that is higher at all angles between 0 and 70° than a decorative element comprising the same transparent body with a mirror layer applied on the comparable regions of the back surface of the decorative element to those on which a retroreflective film is provided according to the invention.

As the person skilled in the art would understand, the reflection grade may vary depending on the angle of incidence of the light, the geometry of the retroreflective film and the geometry of the transparent body. For example, transparent bodies with a front surface having a table will have a higher retroreflection grade at 0° if the table is larger. However, the aesthetic appearance of the decorative element will be less advantageous if the table is too large. Therefore, in embodiments the front surface of the transparent body has a table (i.e. a section that is parallel to the back surface of the transparent body) and facets, and the area of the front surface covered by the facets may be beneficially larger than the area covered by the table. In embodiments, the area of the front surface covered by the facets may be at least twice as large, or at least three times as large as the area covered by the table. In embodiments, the front surface of the transparent body does not include a table. In some embodiments where the front surface comprises a table, the area of the table may be at least twice as small as the area of the back surface of the transparent body. In some such embodiments, the area of the back surface of the transparent body may be 3, 4, 10, 20, 50, 100, or 140 times larger than the area of the table.

In embodiments, the decorative elements according to the invention have a light return (also known as 'brightness' or 'brilliance') of at least 0.04%, at least 0.05%, at least 0.06%, at least 0.07%, or at least 0.08%. Brightness is defined as the extent of internal and external reflections of 'white' light seen in a polished gemstone when viewed face-up. It can be measured according the Gemological Institute of America (GIA) standard as set out in Moses et al., 2004 (Gems & Gemology, Fall 2004, Vol. 40, No. 3, https://www.gia.edu/gems-gemology/fall-2004-grading-cut-guality-brilliant-diamond-moses).

Therefore, the decorative elements according to the invention may maintain an acceptable level of brightness for a decorative gemstone, despite the addition of retroreflective properties.

As explained above, retroreflective films exist in two main types: glass bead films and prismatic films. Glass bead films comprise a layer of glass microbeads partially embedded in a matrix, the matrix comprising a metallised top coat. Glass bead films may have an encapsulated construction, where a top film is provided which creates an air cavity between the beads, the surface of the matrix and the top film.

Prismatic retroreflective films comprise microprisms (also referred to as 'corner cubes') forming a prismatic layer, and exist as two main types: air-backed prismatic films and metallised prismatic films. Air-backed prismatic films include a base layer and a prismatic layer that are similar to those of Figures 3A-C, but include a layer of air trapped between the back of the microprisms and a backing layer, instead of the metallisation layer 34. Metallised prismatic films, as shown on Figures 3A-C comprise a reflective metallic layer applied on the back surface of the prismatic layer 32.

Prismatic films are generally preferable for the purpose of the invention because they have a higher reflection grade than glass bead films. This is particularly advantageous when small decorative elements are produced. As such, large decorative elements (e.g. having a depth of e.g. 10 mm or greater) may be provided with glass bead retroreflective films, whereas smaller depth elements (e.g. below 10 mm in depth) are beneficially configured with prismatic films. As the skilled person would understand, the choice depends on availability of materials and retroreflection requirements and as such the above dimensions are provided merely as examples.

Further, encapsulated and air-backed constructions are generally less advantageous because they cannot be cut arbitrarily without generating openings in the air cavities formed by the top film and backing layer, respectively. This can result in damage to the film, and/or in dirt, water or other impurities entering the air cavities and negatively affecting the optical properties of the film.

Therefore, metallised prismatic retroreflective films are also generally preferred for the purpose of the invention as they have a high reflection grade and can be cut arbitrarily without altering the optical properties of the resulting cut film and ultimately of the decorative element.

In embodiments, the retroreflective film may be chosen to be weather and/or washing resistant. For example, the film may be configured to be machine washable, compliant with ISO 6330:2000 Method 2A - 25 washings at 40°C. Advantageously, this enables use in exposed conditions and/or on clothing.

In embodiments, the retroreflective film is provided on substantially the whole of the back surface of the transparent body.

In embodiments, the retroreflective film does not overhang the back surface of the transparent body. The absence of overhang may beneficially contribute to the stability of the product as film overhangs may be caught or damaged, which damage may spread through the film. Further, overhangs may be aesthetically problematic or otherwise undesirable.

In embodiments, the retroreflective film is provided on a major portion of the back surface of the transparent body. For example, the retroreflective film may cover most of the back surface of the transparent body, e.g. except for a small perimeter outside of the retroreflective film. In other words, the retroreflective film may be cut such that it is slightly smaller than the back surface of the transparent body. For example, the retroreflective film may cover at least 90%, 95%, 98%, or 99% of the back surface of the transparent body.

Larger surfaces of retroreflective film may provide for better retroreflective properties of the decorative element, while also increasing the risk of creating regions of films that overhang the back surface of the transparent body due to limitations in the precision of the application process. As such, decorative elements comprising a retroreflective film configured to cover most but not all of the surface of the back surface of the transparent body may be particularly advantageous.

In embodiments, the retroreflective film is provided on a region of the back surface of the transparent body that forms a pattern. In other words, the retroreflective film may be cut to form a pattern that does not match the back surface of the transparent body. The pattern may be a positive pattern (e.g. the retroreflective film being cut in the shape of a pattern) or a negative pattern (e.g. the retroreflective film being cut to leave one or more regions of the back surface free of film, the omitted region(s) forming a pattern).

Patterns may be advantageous from an aesthetic point of view, and/or may convey information that is relevant from e.g. a safety point of view.

In embodiments, as will be explained further below, the retroreflective film may be cut by stamping, or by laser cutting. Stamping is advantageous for its simplicity and throughput but requires stamps to be made for each shape to be cut, whereas laser cutting is advantageous for its flexibility of configuration.

The term 'transparent' is used throughout this disclosure to refer to a material that has a transparency higher than zero. In the context of the present invention, a material is called transparent if it allows the transport of light, preferably at least visible light. Preferably, the material is transparent in the conventional sense, i.e. allowing (at least visible) light to pass through the material without being scattered.

The transparent body 2 can be made of a wide variety of materials, for example, glass, plastic or cubic zirconium. Transparent bodies made of glass or plastic are preferred, because they are low cost, non-conductive and are most readily provided with facets. Decorative transparent bodies 2 made of glass, and in particular crystal glass (e.g. as defined by the European Crystal Directive (69/493/EEC)), are particularly preferred, for their superior optical properties.

The invention is not limited in principle with respect to the composition of the glass. 'Glass' in this context means any frozen supercooled liquid that forms an amorphous solid. Oxidic glasses, chalcogenide glasses, metallic glasses or non-metallic glasses can be employed. Oxynitride glasses may also be suitable. The glasses may be one-component (e.g. quartz glass) or two-component (e.g. alkali borate glass) or multi-component (e.g. soda lime glass) glasses. The glass can be prepared by melting, by sol-gel processes, or by shock waves. Such methods are known to the skilled person. Inorganic glasses, especially oxidic glasses, are preferred. These include silicate glasses, soda lime glasses, borate glasses or phosphate glasses. Lead-free crystal glasses are particularly preferred.

For the preparation of the faceted transparent bodies for decorative purposes (e.g. gemstones), silicate glasses are preferred. Silicate glasses have in common that their network is mainly formed by silicon dioxide (SiO₂). By adding further oxides, such as alumina or various alkali oxides, alumosilicate or alkali silicate glasses are formed. If phosphorus pentoxide or boron trioxide is the main network former of a glass, it is referred to as a phosphate or borate glass, respectively, whose properties can also be adjusted by adding further oxides. The mentioned glasses mainly consist of oxides, which is why they are generically referred to as oxidic glasses.

In embodiments, the transparent body is made of soda lime glass, such as e.g. a soda lime glass composition as shown in Table 1 below. Suitably, the faceted transparent body may alternatively be made of lead and barium-free crystal glass. Examples of suitable lead and barium-free crystal glass compositions for use in the present invention are disclosed in EP 1725502 and EP 265149, the contents of which are incorporated herein by reference, and shown in Table 1 below.

| Soda-Lime-Glass Standard | | EP 1725502 Crystal Glass | | EP 2625149 Crystal Glass | |
|---|---|---|---|---|---|
| Oxide: | wt% | Oxide: | wt% | Oxide: | wt% |
| SiO2 | 72.39 | SiO2 | 58.94 | SiO2 | 59.13 |
| B2O3 | | B2O3 | 2.99 | B2O3 | 3.07 |
| K2O | | K2O | 1.99 | K2O | 3.49 |
| Na2O | 13.20 | Na2O | 13.45 | Na2O | 11.40 |
| Li2O | | Li2O | 2.00 | Li2O | 2.15 |
| CaO | 9.32 | CaO | 6.00 | CaO | 7.19 |
| MgO | 3.80 | MgO | 0.72 | MgO | |
| ZnO | | ZnO | 9.00 | ZnO | 7.71 |
| Al2O3 | 1.00 | Al2O3 | 0.42 | Al2O3 | 0.43 |
| Y2O3 | | ZrO2 | 2.00 | ZrO2 | 2.08 |
| TiO2 | | TiO2 | 1.99 | TiO2 | 2.08 |
| Sb2O3 | | Gd2O3 | | Gd2O3 | 0.10 |
| P2O5 | | P2O5 | | P2O5 | 0.70 |
| Sb2O3 | | Sb2O3 | 0.50 | Sb2O3 | 0.47 |
| SO3 | 0.29 | | | | |
| Total | 100.00 | Total | 100.00 | Total | 100.00 |

As another raw material for the preparation of the transparent body 2, plastics can be employed. Transparent plastics are preferred. Among others, the following materials are suitable: acrylic glass (polymethyl methacrylates, PMMA); polycarbonate (PC); polyvinyl chloride (PVC); polystyrene (PS); polyphenylene ether (PPO); polyethylene (PE); poly-N-methylmethacrylimide (PMMI).

An advantage of using a plastics material over glass in the manufacture of transparent bodies for use in the present invention resides, in particular, in the lower specific weight, which is only about half that of glass. In addition, other material properties may also be selectively adjusted. Further, plastics are often more readily processed as compared to glass. Some disadvantages of the use of plastics materials include the low modulus of elasticity and the low surface hardness as well as the massive drop in strength at temperatures from about 70°C and above, as compared to glass.

A preferred plastic is poly-N-methylmethacrylimide, which is sold, for example, by Evonik under the name Pleximid® TT70. Pleximid® TT70 has a refractive index of 1.54, and a transmittance of 91% as measured according to ISO 13468-2 using D65 standard light.

In embodiments, the transparent body is coloured. In some such embodiments, the colouring is provided as a colouring agent throughout the body of the transparent body. For example, when the transparent body is made of glass or crystal glass, a colouring can be achieved by introducing metal oxides in the glass. Alternatively or in addition to colouring the body of the material, a colouring may be provided as a coating or other surface treatment on at least a region of the front and/or back surface of the transparent body. For example, a coloured layer can be applied on the front surface of the transparent body.

In embodiments, a decorative coating is provided on at least a region of the front surface of the transparent body. For example, special effect coatings may be used which provide colour or any other optical property that may have aesthetic value. Coatings may be provided on one or more regions of the front surface of the transparent body, e.g. to generate a pattern.

Colouring and decorative coatings may enable the decorative element to be provided with a variety of decorative effects, improving its flexibility of use. Colourings and decorative coatings are preferably configured such that the transparent body remains transparent to light entering through the front surface and reflecting on the retroreflective film provided on the back surface of the transparent body.

In embodiments, the transparent body is coloured. In some such embodiments, the colouring is provided as a colouring agent throughout the body of the transparent body. For example, when the transparent body is made of glass or crystal glass, a colouring can be achieved by introducing metal oxides in the glass. Alternatively or in addition to colouring the body of the material, a colouring may be provided as a coating on at least a region of the front and/or back surface of the transparent body. For example, a coloured layer can be applied on the front surface of the transparent body.

In embodiments, a decorative coating is provided on at least a region of the front surface of the transparent body. For example, special effect coatings may be used which provide colour or any other optical property that may have aesthetic value. Coatings may be provided on one or more regions of the front surface of the transparent body, such as e.g. to generate a pattern.

As previously mentioned, a layer of adhesive 4 is provided between the retroreflective film 3 and the back surface 2b of the transparent body 2 of the decorative element 1 according to the invention.

Preferably, the layer of adhesive is transparent. In other words, the adhesive is preferably chosen such that, when applied at a thickness sufficient to bond the retroreflective film 3 and the transparent body 2, it is transparent. Preferably, the adhesive is such that visible light can pass through the adhesive and be reflected on the retroreflective film, and no loss of reflected visible light and/or no appearance of coloring is visible to the naked eye due to the presence of the adhesive. For example, the adhesive may have a total visible light transmittance of at least 70%, at least 80%, at least 90%, at least 95% or at least 98%.

Advantageously, the adhesive is chosen and applied such that adhesion between the transparent body and the retroreflective film is resistant to the intended conditions of use (for example: weather, washing, sweat etc.). When a backing layer 5 is provided which contains an adhesive, the adhesive between the transparent body and the retroreflective film may be chosen such that the adhesion between the film and body is at least as strong as the adhesion between the decorative element and an article to which it is intended to be applied, using the adhesive of the backing layer.

As the person skilled in the art would understand, the thickness that is sufficient to bond the retroreflective film and the transparent body may vary depending on the adhesive. Generally, the adhesive would be applied in a thickness between 30 µm and 200 µm, preferably between 50 µm and 170 µm, between 70 µm and 150 µm, or between 70 µm and 130 µm. In embodiments, the adhesive may be applied in a thickness of about 100 µm.

When an adhesive is applied too thinly (e.g. below 30 µm, below 50 µm, or below 70 µm depending on the adhesive), the bond may be too weak. When the adhesive is applied too thickly (e.g. above 200 µm, above 180 µm, above 150 µm or above 130 µm depending on the adhesive), some of the adhesive may be wasted with no increase in bond strength, the adhesive layer may lose transparency (at least to some extent), and some of the adhesive may spill outside of the bonding area when the decorative element is assembled. This may increase the complexity of the process as the excess may need to be removed.

Advantageously, applying the adhesive at a target thickness of about 100 µm may ensure that the thickness of the adhesive layer remains within the preferred range of between 70 µm and 130 µm, despite variability (which can be relatively high, such as e.g. ±20 µm) in thickness that may be inherent to the adhesive application process.

As the skilled person would understand, the choice of adhesive may depend on the material of the transparent body and/or of the top layer of the retroreflective film (base layer or protective film, as the case may be). Adhesives such as UV glues, chemical or thermal curing glues (also known as 'reactive') and/or thermal non-curing (also known as 'hot-melt') glues are generally suitable. When the transparent body is made of glass, such as crystal glass, UV and chemical or thermal curing glues are particularly suitable.

Reactive glues such as UV glues and chemical / thermal curing glues are particularly advantageous as they are hard and stable when fully cured (i.e. when the curing reaction process is completed the glue is hard and cannot be re-melted). By contrast, hot-melt adhesives (thermal non-curing glues) rely on thermoplastic materials that solidify as they cool down and can be re-melted.

Reactive glues can be provided as a multi-component adhesive or as a one part adhesive. Multi-component adhesives harden by mixing two or more components which chemically react. Common multi-components adhesives include combinations of polyester resin - polyurethane resin; polyols - polyurethane resin; and acrylic polymers - polyurethane resins. One part adhesives harden via a chemical reaction with an external energy source, such as radiation, heat, and/or moisture. These include ultraviolet (UV) light curing adhesives (generally acrylic based), as well as heat curing adhesives (also referred herein as 'thermal curing adhesives'; generally a pre-made mixture of two or more components that react and cross-link when heat is applied, including thermoset epoxy adhesives, urethanes and polyimides) and moisture curing adhesives (which react with moisture present on the substrate surface or in the air, and include cyanoacrylates and urethanes). Multi-component reactive glues and one-part moisture-curing adhesives are jointly referred to herein as 'chemical curing glues' or 'chemical hardening glues'. As the skilled person would understand, some reactive glues may span multiple of these categories, i.e. curing in the presence of two or more of UV light, heat and moisture.

UV glues are advantageous because their curing can be tightly controlled in the manufacturing process. The glue can be applied on the retroreflective film and/or the transparent body at a convenient time in the process (see below for a description of a process of making decorative elements according to the invention), then the decorative element can be assembled and the glue cured by exposing the glue to UV light through the transparent body, as and when needed. However, UV glues have the disadvantage that they may not be easily cured when the transparent body is colored, or coated in any way that restricts penetration of UV light through the transparent body. For example, a transparent body comprising red glass may make the curing of a UV glue through the transparent body more difficult.

By contrast, chemical and thermal curing glues are both reactive glues that do not impose any limitations on the colour of the transparent body. Chemical hardening glues are particularly preferred as they do not require an additional process step to cure the glue (compared to UV glues which require an additional step of applying UV light to cure the adhesive, or thermal curing glues which require an additional step of applying heat to cure the glue). Amongst chemical curing glues, one-part adhesives that are cured at least partly by reaction with moisture are advantageous as they do not require an additional step of mixing two or more components prior to application of the adhesive on the retroreflective film and/or transparent body.

Adhesives that can be applied on the retroreflective film prior to cutting are particularly advantageous. Indeed, it is comparatively easy and economical to apply glue uniformly to a continuous film than to a multitude of small, discrete surfaces, such as the back surface of the transparent body or the surface of a cut piece of film. Additionally, applying the adhesive to the whole surface of a sheet of film prior to cutting may help to ensure that the whole surface of the retroreflective film that will be applied to the transparent body is fully covered with glue.

Therefore, it may be advantageous if the uncured adhesive has a viscosity that is sufficiently high for a layer of adhesive applied on the retroreflective film to maintain its thickness for a period of time that is sufficient for cutting and assembly of the film with the transparent body. Advantageously, the viscosity of the pre-cured glue is high enough to enable this benefit, while being low enough to enable convenient application to the surface of the retroreflective film. Further, the curing time of these adhesives is advantageously controllable for long enough to allow for cutting and assembly prior to the glue curing beyond the point at which adhesion with the transparent body can take place. Suitable adhesives may include UV curing glues and thermal curing glues (where the timing of curing is controlled by application of light or heat, respectively) as well as chemical curing glues that have a curing time sufficient to allow for cutting of the retroreflective film and assembly with the transparent body following application of the glue on the film.

Advantageously, a chemical hardening glue can be chosen to have a curing time (following mixing of the one or more components or the exposure to moisture) that is sufficiently long for the glue to be applied onto the retroreflective film and/or the transparent body at a convenient stage of the manufacturing process and for the decorative element to be assembled before the glue is then cured after a specific period of time from application. For example, chemical hardening glues that cure (i.e. fully react) in 4 to 168 hours, preferably in 8 to 48 hours, in 8 to 36 hours, in 12 to 36 hours or in about 24 hours may be selected. Indeed, such hardening characteristics may allow sufficient time for assembly of the components following application of the glue, while not taking so long to cure as to put an onerous constraint on the further handling steps of the assembled decorative elements.

In embodiments, the curing speed can be adjusted by controlling the atmospheric conditions during curing. For example, some reactive glues (UV, moisture or temperature sensitive) may have a different curing speed at high or low humidity. High humidity may, for example, refer to values of absolute humidity above about 18 g/m³; and low humidity may refer to values of absolute humidity below about 4 g/m³. In such examples, the humidity may be controlled to be low during and following application of the glue onto the retroreflective film and/or transparent body, then higher after the retroreflective film and transparent body have been assembled, so as to increase the curing speed and obtain cured components that can be manipulated as quickly as possible after assembly.

In embodiments, the adhesive may be a polyurethane-based, temperature and humidity-dependent reactive glue, such as TECHNOMELT® PUR 9041 by HENKEL®. Such adhesives can be applied to the retroreflective film and/or the transparent body prior to assembly (and possibly even prior to cutting of the retroreflective film, if the adhesive is applied thereon). Such adhesives can be applied with a thickness of about 70 µm to 130 µm, such as about 100 µm. Advantageously, such adhesives may take about 24 hours to fully cure. Further, the speed of curing of such adhesives may be adjustable by controlling the humidity and/or the temperature of the environment during curing.

In embodiments, the adhesive may be a modified acrylate-based combined UV and moisture curing glue, such as DUALBOND® AD4950 by DELO®. Such adhesives can be applied to the retroreflective film and/or the transparent body prior to assembly (and possibly even prior to cutting of the retroreflective film, if the adhesive is applied thereon). Such adhesives can be applied with a thickness of about 50 µm.

In embodiments, the adhesive may be a modified urethane acrylate-based UV curing glue, such as PHOTOBOND® GB368 by DELO®, or other UV curing glue such as UV 600 by ADHESIVE PRODUCTS GMBH. Such adhesives can be applied to the retroreflective film and/or the transparent body prior to assembly (and possibly even prior to cutting of the retroreflective film, if the adhesive is applied thereon). Such adhesives can be applied with a thickness of about 50 µm.

In embodiments, the backing layer 5 comprises one or more adhesives and/or one or more protective layers.

In embodiments, the backing layer may comprise one or more layers of adhesive. This may enable easy application of the decorative element to the surface of an article.

In embodiments, the backing layer may comprise a layer of adhesive and a protective film. In such embodiments, the protective film may be removed from the adhesive before applying the decorative element onto the surface of an article. In such embodiments, the layer of adhesive may comprise a non-reactive pressure sensitive adhesive. Advantageously, a pre-applied pressure sensitive adhesive may enable easy application of the decorative element to objects such as plastic or metal articles.

In embodiments, the pressure-sensitive adhesive is present in a thickness between 50 µm and 150 µm. For example, the backing layer may comprise a layer of pressure sensitive adhesive that is about 100 µm thick. Advantageously, a layers of pressure sensitive adhesive in the above range may provide for sufficient adhesion while not wasting adhesive.

In embodiments, the pressure sensitive adhesive may be supported on a protective film, which may be applied to the decorative element as a whole, i.e. unitary element comprising the film and adhesive. The protective film may comprise e.g. a polyester or polyethylene foil. The protective film may have a thickness of between 20 and 70 µm, such as e.g. about 50 µm.

In embodiments, the pressure sensitive adhesive is an acrylate-based pressure sensitive adhesive. In embodiments, the acrylate-based pressure sensitive adhesive is supported on polyester foil, or on polyethylene foil. Such films may be commercially available, for example, from Biolink GmbH (a Saint-Gobain company).

In embodiments, the backing layer may comprise a layer of non-reactive thermal adhesive (i.e. a hot-melt glue) on the side of the backing layer that is exposed in the finished product. Advantageously, a pre-applied hot-melt adhesive may enable easy application of the decorative element to many surfaces including e.g. garments, textiles, etc.

In embodiments, the hot-melt adhesive is applied in a thickness between 100 µm and 200 µm. For example, the backing layer may comprise a layer of hot-melt adhesive that is about 150 µm thick.

Advantageously, layers of hot-melt adhesive in the above range may provide for sufficient adhesion even on porous substrates such as textiles. When the layer of hot-melt adhesive is too thick, the risk of the hot-melt adhesive spilling out when the decorative element is applied on a surface increases, resulting in possible application problems, loss of aesthetic quality, and waste of adhesive.

In embodiments, the hot-melt glue is a copolyamide-based glue, such as Griltex® 1A from EMS-CHEMIE. In embodiments, the hot-melt glue is a thermoplastic polyurethane-based glue, such as VP 1006 by Collano® AG.

In embodiments, the backing layer 5 comprises a protective layer. In embodiments, the backing layer 5 comprises a protective layer and one or more adhesive layer(s), at least one of the one or more adhesive layers being provided on the side of the backing layer that is exposed in the finished decorative element.

In embodiments, the backing layer 5 comprises a protective layer comprising a layer of lacquer. In particular, the layer of lacquer protects the retroreflective film 3 from mechanical or chemical damage and helps to preserve the structure of the retroreflective film 3. In embodiments, the layer of lacquer may be pigmented. The choice of a lacquer may depend on the aesthetic and functional properties that are desired for the object, as well as balancing considerations of costs and availability of the materials.

Preferably, the lacquer is selected so as to be chemically and mechanically robust. A lacquer is considered to be mechanically and chemically robust if it would not substantially degrade or allow degradation of the underlying retroreflective film in the conditions that would be expected in the intended use. Thus, as the skilled person would appreciate, the choice of a particular lacquer may depend on the intended conditions of use of the decorative element. For example, depending on the intended use it may be advantageous for the multilayer coating to be highly resistant to sweat, corrosion and/or climate exposure. As the skilled person would appreciate, tests are available to ensure that a chosen lacquer results in a composite body that satisfies the requirements of the product in which the decorative element is intended to be incorporated. For example, an anti-corrosion salt spray test may be used to test resistance to corrosion. In general, a composite body may be considered to be resistant to a particular condition when the decorative element comprising the coating does not show significant visible degradation when repeatedly exposed to the said conditions in a laboratory setting. In particular, within the context of this disclosure, 'high resistance' may be interpreted to mean that the decorative element shows no significant alteration when exposed to one or more, and preferably all, of the following tests: temperature change test according to DIN 9022-2, sulfur dioxide (corrosion) test according to DIN 50018 - KFW 0,2 S; environmental test according to DIN ISO 9022-2 (cold, heat and humidity); and salt spray test according to DIN EN 60068-2-11 Ka.

The lacquer may additionally ensure that the decorative element according to the invention is bondable. As the skilled person would understand, the choice of a suitable lacquer may depend on the material to which the decorative element is intended to be bonded, and/or on the adhesive that is intended to be used.

In convenient embodiments, the layer of lacquer comprises a lacquer selected from the group consisting of: epoxy lacquers, one component polyurethane lacquers, bi-component polyurethane lacquers, acrylic lacquers, UV-curable lacquers, and sol-gel coatings. Suitably, the lacquer is a polyurethane lacquer, such as a bi-component polyurethane lacquer.

The layer of lacquer may be applied using any two-dimensional application method known in the art. For example, the layer of lacquer may be applied by spraying, digital printing, rolling, or curtain coating.

In embodiments, the lacquer may be applied with a thickness of between about 4 and 14 µm (i.e. 9 ±5 µm); for example, the lacquer may be applied with a thickness of about 9 µm.

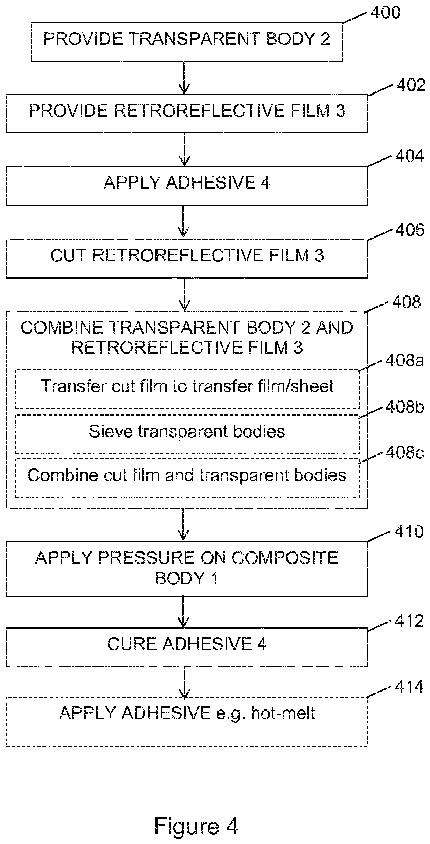

**Figure 4** is a flowchart illustrating a method of making a decorative element according to embodiments of the invention. As the skilled person would understand, the method described below may be performed with a single transparent body or simultaneously for a plurality of transparent bodies, resulting in the making of a plurality of decorative elements. For example, tens, hundreds or thousands of decorative elements may be made simultaneously, or as part of a batch or continuous manufacturing process. As such, references to a 'transparent body' or 'decorative element' are to be understood as also optionally relating to single instances which are part of a plurality of instances processed simultaneously.

In step 400, a transparent body is provided. The transparent body has a faceted front surface and a back surface, as described above. Methods of making transparent bodies, such as e.g. crystals, are known in the art and will not be detailed further herein. In step 402, a retroreflective film is provided. The retroreflective film may be a prismatic or glass-bead retroreflective film, as explained above. Preferably, the retroreflective film may have a metallised prismatic construction. Methods of making retroreflective films are known in the art and will not be detailed further herein.

In step 404, adhesive is applied onto at least a region of the retroreflective film and/or at least a region of the back surface of the transparent body or bodies. In embodiments, the adhesive is applied as a layer. In embodiments, the layer of adhesive is applied on substantially the whole surface of the retroreflective film, or the adhesive may be applied at discrete (i.e. non continuous) locations, for example, as dots or droplets. The adhesive may be applied using any technique known in the art, such as by spraying, deposition, roll-to-roll, roll-to-plate techniques etc. as appropriate depending on the adhesive used and the surface on which it is applied (e.g. film, transparent body, etc.).

In step 406, the retroreflective film is cut to a desired shape. In particular, the film is cut such that it forms a piece that can cover at least a region of the back surface of the transparent body (or a plurality of pieces that each cover at least a region of the back surface of each of a plurality of transparent bodies). As explained above, the film may be cut such that it covers substantially the whole back surface of the transparent body on which it is to be applied, or a part thereof - for example, leaving a (thin) perimeter of the back surface around the cut piece of film, or forming a pattern, as explained above. Preferably, the film is cut such that it forms a piece that can be applied to the back surface of the transparent body without any part of the cut film overhanging the back surface of the transparent body. As described above, overhangs may be aesthetically undesirable or problematic, and may represent potential points of structural weakness of the composite body.

In embodiments, the film may be cut by stamping. Advantageously, cutting by stamping may be performed with a relatively high throughput and does not require expensive and/or complex equipment. Alternatively, the film may be cut by laser cutting. Advantageously, laser cutting has a high flexibility in relation to the shape of cutting since a new stamp does not have to be generated for every new shape.

In embodiments, the film is cut by stamping and the cutting step does not require edge finishing.

In embodiments, the step of cutting the film may precede the step of applying the adhesive. For example, this may be the case if the adhesive is applied directly onto the transparent body rather than the film, or if the adhesive can be applied on the cut film. Advantageously, applying the adhesive on the film prior to cutting may help to ensure that the whole surface of film that will be applied to the transparent body or each of the transparent bodies is covered with adhesive. Further, applying the adhesive on a continuous film may be more efficient and cost effective than applying adhesive on each of a plurality of pieces of cut film and/or transparent bodies.

At step 408, the transparent body or bodies and the cut piece(s) of retroreflective film are combined such that a composite body (or bodies) is (are) obtained comprising the transparent body and the retroreflective film applied on at least a region of the back surface of the transparent body.

According to the method of construction schematically represented in Figure 4, the step of combining the transparent body (or bodies) and the piece (or pieces) of retroreflective film comprises a step 408a of transferring the cut film(s) to a transfer film or sheet. In embodiments, the transfer film or sheet is a pressure sensitive adhesive tape. For example, a tape comprising a base layer made from a polyester film, and a silicon adhesive may be used. Preferably, the step of transferring the cut film(s) to a transfer film or sheet is performed with a high accuracy. In embodiments, the film is cut directly onto the transfer film such that the position of the cut film on the transfer film can be known with high accuracy. For example, when the film is cut by stamping, the transfer film may be positioned directly under the stamping tool such that the cut films are directly positioned onto the transfer film in positions corresponding to the configuration of the stamping tool used. In the illustrated embodiment, the step of combining the transparent body (or bodies) and the cut retroreflective film(s) further comprises a step 408b of sieving transparent bodies such that the transparent bodies are placed at known relative locations that match the positions of the cut film on the transfer film. The cut pieces of film on the transfer film and the transparent bodies are then combined with high positional accuracy at step 408c. In embodiments, the transfer film carrying the cut pieces of film is applied onto the transparent bodies, which are placed in determined precise positions, for example, by sieving. In embodiments, the transfer film is a self-adhesive film. Advantageously, this enables the cut pieces of film to be maintained in position while the transfer film and cut pieces of film are applied onto the transparent bodies.

According to the embodiment of the method depicted in Figure 4, pressure is then applied 410 on the composite body (transparent body, adhesive and retroreflective film) or bodies, in order to adhere the transparent body and retroreflective film and to remove bubbles that may have been trapped between the adhesive and the retroreflective film or back surface of the transparent body, as the case may be. Bubbles may appear due to slight unevenness in the thickness of the adhesive layer. As such, if nothing is done in order to prevent the creation of bubbles / remove any bubbles that may have appeared, bubbles may remain trapped in the glue as it cures, and the optical quality of the decorative element (i.e. at least its retroflection grade) may be lower.

The problems associated with the presence of bubbles may increase if the adhesive cures too quickly. Indeed, in such cases, application of pressure may not be enough to fully remove any bubbles that may be present as the adhesive is no longer plastic enough. In embodiments, the curing of the adhesive is advantageously controlled such that little or no curing occurs before the composite bodies are assembled at step 408 and pressure is applied on the composite bodies at step 410. In embodiments where curing requires the application of UV light and/or heat, curing can be controlled such that it only or primarily occurs after step 410. In embodiments where curing is triggered by exposure to moisture, the humidity in the atmosphere can be controlled such that curing is slow (i.e. the humidity is low) until steps 408 and 410 are completed. Advantageously, the level of humidity may also be controlled such that curing is faster thereafter (i.e. the humidity is high), in order to obtain fully bonded decorative components that can be handled as quickly as possible after bubbles have been removed. In embodiments where curing is triggered by mixing of multiple components, the components and their relative concentrations may be chosen such that curing happens at a speed that is appropriate for the throughput of steps 408 and 410. In embodiments where the adhesive is a temperature-dependent non-reactive adhesive, the temperature of the composite body may be controlled such that the adhesive is not fully hard until steps 408 and 410 are completed.

In embodiments, the pressure is applied at step 410 by means of a vacuum. The use of a vacuum ensures that a uniform pressure is applied on the composite body or bodies despite any variations in height between composite bodies (due to e.g. variations in the height of the transparent body, the retroreflective film and/or the adhesive layer). As a result, this further reduces the risk of air bubbles being trapped between the retroreflective film and the transparent body, thereby improving the optical properties of the resulting component.

In embodiments, the pressure is applied at step 410 by assembling the composite body or bodies on a vacuum plate, applying a flexible (e.g. silicon) film on the assembled component(s), and pumping out air between the flexible film and the vacuum plate. As noted above, this set up advantageously results in uniform pressure being applied on the component(s) despite variability in the heights of the components. In embodiments where the components are assembled at step 408c by applying the transfer film carrying the cut pieces of film onto the decorative elements, the decorative elements can be transferred onto a vacuum plate by overturning the assembled components onto the vacuum plate.

In embodiments, the vacuum is maintained for a period of time sufficient to remove any bubbles trapped between the adhesive and the retroreflective film or transparent body. For example, the vacuum may be maintained for at least 2 seconds, at least 5 seconds, at least 10 seconds, at least 30 seconds, or at least one minute.

At step 412, the adhesive is cured. Depending on the type of adhesive used, curing may comprise exposing the adhesive to UV light through the transparent body or from the side of the composite body; applying heat to the composite body; or simply allowing the curing reaction to take place (passively, for example when a multi-component adhesive is used or when a one-component adhesive is used that cures at standard atmospheric humidity conditions; or actively, by controlling atmospheric conditions to e.g. ensure exposure to a desired level of humidity). In embodiments where a non-reactive adhesive is used, the adhesive may be allowed to solidify instead of curing.

In embodiments, the vacuum is maintained for a period of time sufficient for some of the curing reaction of the adhesive to progress (i.e. steps 410 and 412 may be at least partially concomitant). Advantageously, this may result in a composite body (or bodies) that is (are) integrally bonded enough to be moved without e.g. the retroreflective film and transparent body moving undesirably relative to each other, or allowing new bubbles to be trapped. For example, the vacuum may be maintained while heat or UV light is being applied, if the glue is a heat- or UV-sensitive reactive glue, respectively. Alternatively, where the adhesive is a chemical hardening glue, the vacuum may be maintained for at least 30 seconds, at least 1 minute, at least 5 minutes, or at least 30 minutes.

In embodiments where a multicomponent adhesive is used, the step 404 of applying the adhesive may comprise a preliminary step of mixing the two or more components of the adhesive before or during application.

In embodiments, the method further comprises applying a layer of lacquer onto the side of the retroreflective film distal from the back surface of the transparent body or bodies in the composite body or bodies. The layer of lacquer may be applied, for example, by spraying. The layer of lacquer is preferably applied after curing of the adhesive.

In embodiments, alone or in combination with the step of applying a layer of lacquer in the composite body, the method may comprise an optional step 414 of applying a layer of adhesive on the exposed side of the retroreflective film (or any coating present thereon, such as e.g. a layer of lacquer) of the assembled composite body or bodies. Such an adhesive may enable easy application of the decorative element onto articles by an end-user. As such the layer of adhesive may be thought of as a 'pre-applied' layer for ease of later application. Suitable adhesives may include pressure sensitive adhesives and hot-melt (temperature-dependent non-reactive adhesives), as explained above. Hot-melt adhesives are advantageous for any applications to textiles, garments etc.

The decorative elements according to the invention are particularly suitable for use as decorative elements for use on garments, wearables, fashion accessories, etc. where the combination of retroreflection as well as the aesthetic potential afforded by the use of a faceted transparent body are important.

As such, the invention also encompasses a garment comprising one or more decorative elements according to the first aspect of the invention. For example, the garment may be a clothing accessory such as shoes, a hat, sunglasses, glasses, bags, jewellery such as a bracelet, necklace or watch, an electronic wearable such as an activity tracker, etc. or a piece of clothing such as a shirt, jacket, jumper etc.

Other variations of the invention will be apparent to the skilled person without departing from the scope of the appended claims.

### Examples

### Example 1

In this example, a decorative element according to the invention was made using the process of the invention. In particular, transparent bodies 2 made of crystal and having a geometry as illustrated in Figure 2 were used, where d is 7±0.1 mm and h is 2.8 mm. The crystal used was a lead and barium-free crystal glass according to EP 1725502 (see Table 1 above). Similar results are obtained using different glass substrates, such as soda lime glass standard and crystal glass according to EP 2625149, as exemplified in Table 1 above.

A retroreflective film 3 from ORAFOL® (GP851) was used as the retroreflective film, which comprises cube corner (microprism) retroreflective elements made from polyester, integrally bonded to a flexible, smooth-surfaced, UV-stabilised polymeric film. The prism surfaces were metallised with a vacuum deposited layer of aluminium. Further, the retroreflective film used was weather and solvent resistant, and machine washable (compliant with ISO 6330:2000 Method 2A - 25 washings at 40°C). Its retroreflection properties are shown in Table 2 below, where all values are provided in cd/lux/m². The thickness of the film was about 250 - 300 µm.

| **Observation Angle** | **Entrance Angle (β₁, β₂=0)** | | | |
|---|---|---|---|---|
| | **5°** | **20°** | **30°** | **40°** |
| **0,20°** | 850 | 500 | 350 | 150 |
| **0,33°** | 400 | 300 | 250 | 100 |
| **1,00°** | 25 | 15 | 12 | 10 |
| **1,50°** | 10 | 7 | 5 | 4 |

A polyurethane-based temperature and moisture reactive glue (TECHNOMELT® PUR 9041) was used as the adhesive 4. The adhesive 4 was applied over substantially the whole surface of the film 3 prior to cutting, with a thickness of about 100 µm.

The retroreflective film 3 was cut by stamping to form circular pieces having a diameter of about 7 mm. No edge finishing was required.

Two embodiments of the decorative element were prepared, one of which additionally comprised a layer of pre-applied adhesive on the back of the decorative component (i.e. on the exposed side of the retroreflective film). A copolyamide hot-melt glue was used (EMS-Chemie AG Griltex® 1A), which was applied with a thickness of about 150 µm.

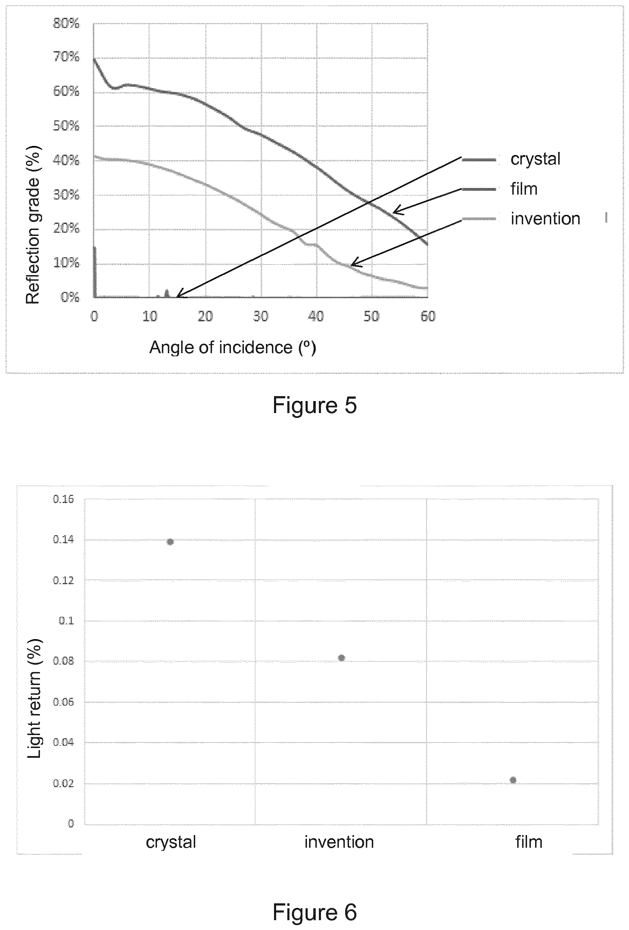

The resulting components were analysed for their optical properties, compared to (i) a flat back crystal according to the prior art (comprising a transparent body having the same constitution and geometry as that of the examples according to the invention, but including a silver mirror layer deposited on the flat back surface instead of a retroreflective film), and (ii) the retroreflective film alone. The results of these analyses are illustrated in Figures 5 to 7. The optical properties of the decorative element with or without pre-applied hot melt adhesive are identical and as such a single data point is shown for both of the exemplified decorative elements according to the invention.

**Figure 5** is a graph showing the simulated retroflection grade (percentage of light returned to the observer - i.e. in the direction of incidence - as a function of the angle of incidence of the light) for the decorative element according to the invention, and comparative examples (retroreflective film alone, indicated as 'film' and flat back with mirrored back according to the prior art, indicated as 'crystal'). In the graph of Figure 5, an angle of 0° is perpendicular to the plane of the table and of the flat back surface of the transparent body. The retroreflection grade was calculated using a ray tracing simulation. Software (SPEOS from ANSYS, https://www.ansys.com/products/optical/ansys-speos), using a light source with a half-width-angle of 0.5 degrees.

**Figure 6** is a graph showing the measured light return (brilliance / brightness) for the decorative element according to the invention, and comparative examples (retroreflective film alone, indicated as 'film' and flat back with mirrored back according to the prior art, indicated as 'crystal'). Brightness is defined as the extent of internal and external reflections of 'white' light seen in a polished gemstone when viewed face-up. Measurements were made according to the Gemological Institute of America (GIA) standard as set out in Moses et al., 2004 (Gems & Gemology, Fall 2004, Vol. 40, No. 3, https://www.gia.edu/gems-gemology/fall-2004-grading-cut-quality-brilliant-diamond-moses).

As can be seen in Figure 5, a flat back crystal with a mirrored back according to the prior art has very poor retroreflection, with only a small peak at 0° (light incident straight through the table), and a further peak between 10 and 20° (which is dependent on the geometry of the facets of the crystal). By contrast, a retroreflective film according to the prior art shows very high retroreflection grades at angles of incidence between 0° and 60°, the lowest retroreflection grade for the film (60°) being as high as the highest reflection grade for the flat back crystal of the prior art.

Conversely, looking at Figure 6 it can be seen that a flat back crystal with a mirrored back according to the prior art has high brightness (about 0.14%), whereas the retroreflective film according to the prior art has a comparatively low brightness (about 0.02%).

These data reflects the fact that the retroreflective film was designed to reflect light directly in the direction of incidence, whereas a faceted crystal is typically designed to reflect and diffract light to create aesthetic optical effects such as brightness. As such, the two elements according to the prior art have opposite patterns of optical properties of retroreflection and brightness. Against this background, it was surprisingly found that combining a faceted crystal element with a retroreflective film results in an element that preserves most of the retroreflection grade of the film (and in any case has a retroreflection grade significantly higher at all angles of incidence than the prior art crystal), while also preserving a respectable brightness (about 0.08) typically associated with decorative elements. However, the resulting decorative element still preserves the aesthetic qualities associated with high brightness, while acquiring the additional safety features associated with high retroreflection.

## Claims

1. A decorative element comprising a transparent body having a faceted front surface and a back surface, a retroreflective film provided on at least a region of the back surface of the transparent body, and an adhesive between the retroreflective film and the back surface of the transparent body.

2. The decorative element of claim 1, wherein the back surface of the transparent body is substantially flat and/or wherein the transparent body is made of glass, crystal glass, plastic or cubic zirconium; and/or wherein the transparent body is coloured; and/or wherein the back surface of the transparent element has a diameter of between 1 and 80 mm.

3. The decorative element of claim 1 or claim 2, wherein the retroreflective film is provided on substantially the whole of the back surface of the transparent body; and/or wherein the retroreflective film does not overhang the back surface of the transparent body; and/or wherein the retroreflective film is provided on one or more discrete regions of the back surface of the transparent body.

4. The decorative element of any preceding claim, wherein the retroreflective film is a metallised prismatic retroreflective film.

5. The decorative element of any preceding claim, wherein the adhesive is transparent, and/or wherein the adhesive forms a layer between the retroreflective film and the transparent body that has a thickness between 30 µm and 200 µm, between 50 µm and 170 µm, between 70 µm and 150 µm, or between 70 µm and 130 µm, and/or wherein the adhesive is forms a layer of approximately 100 µm thick.

6. The decorative element according to any preceding claim, wherein the adhesive is a reactive adhesive, such as a chemical and/or thermal curing adhesive; optionally wherein the adhesive is a one-part chemical curing adhesive; and/or wherein the chemical curing adhesive has a curing time between 4 and 48 hours, between 8 and 36 hours, between 12 and 36 hours or of about 24 hours; and/or wherein the adhesive is a polyurethane-based, temperature and humidity-dependent reactive adhesive.

7. The decorative element according to any preceding claim, wherein the adhesive is a reactive adhesive that is configured such that the non-cured adhesive has a viscosity that is sufficiently high for a layer of adhesive applied on the retroreflective film to maintain its thickness for a period of time that is sufficient for cutting and assembly of the film with the transparent body.

8. The decorative element of any preceding claim, further comprising a backing layer on the surface of the retroreflective film that is distal from the back surface of the transparent element, wherein the backing layer comprises one or more layers of adhesive, and/or one or more protective layers; optionally wherein: the one or more protective layers comprises a layer of lacquer; and/or the backing layer comprises a pressure-sensitive adhesive and a protective film or the backing layer comprises a layer of non-reactive thermal adhesive, optionally wherein the non-reactive thermal adhesive is applied in a thickness between 100µm and 200 µm.

9. The decorative element according to any preceding claim, wherein the decorative element has a retroreflection grade of at least 20% at 0°, at least 30% at 0°, or at least 40% at 0°; and/or wherein the decorative element has a light return of at least 0.04%, at least 0.05%, at least 0.06%, at least 0.07% or at least 0.08%

10. A method of making a decorative element, the method comprising: providing a transparent body having a faceted front surface and a back surface; providing a retroreflective film; applying adhesive on at least a region of the retroreflective film and/or at least a region of the back surface of the transparent body; combining the transparent body and the retroreflective film by way of the adhesive such that a composite body is obtained comprising the transparent body and the retroreflective film applied on at least a region of the back surface of the transparent body.

11. The method of claim 10, wherein applying the adhesive comprises applying the adhesive as a continuous layer on an area of the retroreflective film larger than the surface area of the back side of the transparent body, on an area of the retroreflective film larger than the surface area of a plurality of the back sides of a plurality of transparent bodies, or on substantially the whole surface of a sheet of the retroreflective film, and the method further comprises cutting the retroreflective film to a desired shape after application of adhesive on the retroreflective film; optionally wherein the film is cut by stamping.

12. The method of claim 10 or claim 11, further comprising applying pressure on the composite body after assembly; optionally wherein the pressure is applied by providing a flexible material over the assembled composite body and surrounding support surface, and pumping out air between the flexible material and the composite body; optionally wherein the vacuum is maintained for at least 2 seconds, at least 5 seconds, at least 10 seconds, at least 30 seconds, or at least one minute.

13. The method of any of claims 10 to 12, wherein the method comprises cutting the retroreflective film to a desired shape, and the step of combining the transparent body and the retroreflective film comprises: transferring the cut film to a transfer film or sheet, sieving transparent bodies such that the transparent bodies are placed at known relative locations that match the positions of the cut film on the transfer film, and combining the cut pieces of film on the transfer film and the sieved transparent bodies.

14. The method of any of claims 12 or 13, further comprising curing the adhesive; optionally wherein the curing of the adhesive is controlled such that little or no curing occurs before the composite bodies are assembled and pressure is applied on the composite bodies; optionally wherein the step of curing the adhesive comprises one or more of: exposing the adhesive to UV light through the transparent body or from the side of the composite body, applying heat to the composite body, or allowing the curing reaction to take place passively or actively by controlling atmospheric conditions.

15. The method of any of claims 10 to 14, further comprises applying a layer of lacquer onto the side of the retroreflective film distal from the back surface of the transparent body in the composite body; and/or applying a layer of adhesive onto the exposed side of the retroreflective film.
